# EUROPÄISCHE PATENTSCHRIFT

(11) **EP 2 557 434 B1**
(45) Veröffentlichungstag und Bekanntmachung des Hinweises auf die Patenterteilung: **05.10.2016**
(21) Anmeldenummer: 12178403.7
(22) Anmeldetag: 30.07.2012
(51) Int. Cl.: G01S 7/52, G01S 7/527, G01S 15/10, G01S 15/93, G01S 7/537

(54) **Verfahren zum Bestimmen der Herkunft eines von einem Ultraschallsensor eines Kraftfahrzeugs empfangenen Empfangssignals, Fahrerassistenzeinrichtung und Kraftfahrzeug**
A method for determining the origin of a signal received by an ultrasonic sensor of a motor vehicle, driver assistance device and the motor vehicle
Procédé pour déterminer l'origine d'un signal reçu par un capteur à ultrasons d'un véhicule automobile, dispositif d'assistance au conducteur de véhicules automobiles

(30) Priorität: 09.08.2011 DE 102011109830
(43) Veröffentlichungstag der Anmeldung: 13.02.2013
(73) Patentinhaber: Valeo Schalter und Sensoren GmbH, 74321 Bietigheim-Bissingen (DE)
(72) Erfinder: Hallek, Michael, 71717 Beilstein (DE); Jung, Thomas, 74074 Heilbronn (DE); Grüdl, Dietmar, 71679 Asperg (DE); Frischmann, Christian, 74343 Sachsenheim (DE)
(74) Vertreter: Pothmann, Karsten

(56) Entgegenhaltungen:
- WO-A1-2011/058527
- US-A- 5 173 881
- US-A1- 2009 135 672

## Beschreibung

Die Erfindung betrifft ein Verfahren zum Überprüfen eines von einem Ultraschallsensor eines Kraftfahrzeugs empfangenen Empfangssignals auf seine Herkunft. Ein Sendesignal des Ultraschallsensors wird moduliert, und durch diese Modulation wird dem Sendesignal ein vorbestimmtes, spezifisches Codewort aufgeprägt. Ein so moduliertes Sendesignal wird dann ausgesendet. Dann wird ein Empfangssignal empfangen, welches mit dem als Referenzsignal dienenden Sendesignal verglichen wird. In Abhängigkeit von einem Ergebnis des Vergleichs wird die Herkunft des Empfangssignals bestimmt. Die Erfindung betrifft außerdem eine Fahrerassistenzeinrichtung für ein Kraftfahrzeug, wie auch ein Kraftfahrzeug mit einer Fahrerassistenzeinrichtung.

Ultraschallsensoren für Kraftfahrzeuge sind Stand der Technik. Sie werden in der Regel zum Unterstützen des Fahrers beim Vornehmen von Parkvorgängen eingesetzt. Dabei gehören die Ultraschallsensoren zu einer Fahrerassistenzeinrichtung bzw. einem Fahrerassistenzsystem, welche bzw. welches als Parkhilfe bezeichnet wird. Mithilfe der Ultraschallsensoren können Abstände zwischen dem Kraftfahrzeug und in seiner Umgebung befindlichen Hindernissen gemessen werden. Die Ultraschallsensoren arbeiten nach dem Echolaufzeitprinzip; dies bedeutet, dass die Abstandsmessung in der Ultraschalltechnologie mittels eines Echolaufzeitverfahrens bzw. Echolotverfahrens erfolgt. Der Ultraschallsensor sendet ein Sendesignal - Ultraschall - und empfängt ein Empfangssignal - ebenfalls ein Schallsignal -, welches das von einem fahrzeugexternen Objekt reflektierte Sendesignal ist. Es werden also Ultraschallwellen ausgesendet, von einem Objekt reflektiert und wieder empfangen. In Abhängigkeit von der gemessenen Laufzeit der Ultraschallwelle wird dann der Abstand zwischen dem Objekt und dem Kraftfahrzeug bestimmt.

Es ist auch Stand der Technik, das Sendesignal eines Ultraschallsensors zu modulieren, sodass mit dem Sendesignal ein spezifisches Codewort - nämlich eine Kennung - übertragen wird. Dieses Sendesignal kann dann von anderen Störsignalen bzw. von Schallsignalen anderer Sensoren bzw. anderer Kraftfahrzeuge unterschieden werden. Auf der einen Seite kann somit das empfangene Signal von Ultraschallsignalen anderer Kraftfahrzeuge unterschieden werden; andererseits wird somit auch ein gleichzeitiger Betrieb mehrerer Ultraschallsensoren ein und desselben Kraftfahrzeugs ermöglicht. In diesem Falle sendet jeder Ultraschallsensor ein Sendesignal mit einer zugeordneten spezifischen Kennung und kann dann das eigene Schallsignal wieder erkennen.

Ein Verfahren zum gleichzeitigen Betreiben mehrerer Ultraschallsensoren ist beispielsweise aus dem Dokument DE 101 06 142 A1 bekannt. Das Sendesignal eines ersten Sensors wird linearfrequenz-moduliert, nämlich aufwärts. Es entsteht somit ein linearmodulierter Wellenimpuls (chirp). Das Sendesignal eines zweiten Sensors wird ebenfalls linearfrequenz-moduliert, jedoch abwärts, d.h. die Frequenz wird über der Zeit verringert. Das Sendesignal eines dritten Sensors wird ohne eine Frequenzmodulation ausgesendet. Somit können die Sendesignale der Ultraschallsensoren voneinander unterschieden werden, wenn sie von fahrzeugexternen Objekten reflektiert werden. Auch aus der Druckschrift EP 1 105 749 B1 ist bekannt, dass die Sendesignale unterschiedlicher Ultraschallsensoren mit einer eigenen Kennung versehen werden und somit voneinander unterschieden werden können. Die jeweilige Kennung der Sendesignale wird zeitlich verändert. Somit können die empfangenen Schallsignale eindeutig den Ultraschallsensoren zugeordnet werden, wenn eine mögliche Störquelle ihre Kennung nicht exakt zeitlich genauso ändert. Somit wird die Wahrscheinlichkeit eines Fehlers bei der Zuordnung der Schallsignale zu den Ultraschallsensoren reduziert. Die zeitliche Änderung der Kennung kann beispielsweise zufällig erfolgen, und zwar mithilfe einer Zufallsfunktion.

Die Codierung eines Schallsignals eines Ultraschallsensors ist außerdem aus den Dokumenten DE 37 01 521 A1, US5173881 und US20090135672 bekannt.

Nun richtet sich das Interesse auf die Bestimmung der Herkunft des empfangenen Empfangssignals: Wenn das Sendesignal moduliert ist, so muss auch überprüft werden, ob auch das empfangene Empfangssignal dieselbe Kennung aufweist und somit das von einem Objekt reflektierte Sendesignal ist bzw. ein und demselben Ultraschallsensor zugeordnet werden kann. Nach heutigem Stand der Technik werden die empfangenen Signale mittels Korrelation auf ihre Codierung überprüft. Das Ergebnis der Korrelation ist ein Maß für die Übereinstimmung zwischen dem empfangenen Ultraschallsignal und dem erwarteten. Es wird also eine Korrelation zwischen dem empfangenen Signal und einem Referenzsignal berechnet, wobei als Referenzsignal das ausgesendete Sendesignal verwendet wird. Wird eine relativ große Korrelation zwischen dem Empfangssignal und dem Referenzsignal erkannt, so wird festgestellt, dass es sich bei dem Empfangssignal um das eigene Signal des Ultraschallsensors handelt. Nur in diesem Falle wird das Empfangssignal weiter verarbeitet und der Abstand zwischen dem Kraftfahrzeug und dem Objekt berechnet. Es hat sich jedoch herausgestellt, dass anhand einer einfachen Korrelation die Bestimmung der Herkunft des Empfangssignals nicht immer mit größter Genauigkeit möglich ist. Dies ist nämlich dann der Fall, wenn sich das Kraftfahrzeug relativ zum Hindernis bewegt und somit die Relativgeschwindigkeit zwischen dem Kraftfahrzeug und dem Hindernis größer als null ist. In einer solchen Situation ist das Empfangssignal aufgrund des Doppler-Effekts gegenüber dem Sendesignal frequenz-verschoben und somit gegenüber dem Sendesignal im Zeitbereich komprimiert oder ausgedehnt. Würde man nun eine Korrelation zwischen dem Empfangssignal und dem Sendesignal berechnen, so wäre diese Korrelation nahezu null, obwohl das Empfangssignal tatsächlich von ein und demselben Ultraschallsensor stammt.

Es ist Aufgabe der Erfindung, eine Lösung aufzuzeigen, wie bei einem Verfahren der eingangs genannten Gattung mit großer Genauigkeit festgestellt werden kann, ob das Empfangssignal von dem Ultraschallsensor stammt oder nicht.

Diese Aufgabe wird erfindungsgemäß durch ein Verfahren, durch eine Fahrerassistenzeinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird ein von einem Ultraschallsensor eines Kraftfahrzeugs empfangenes Empfangssignal auf seine Herkunft hin überprüft. Ein Sendesignal des Ultraschallsensors wird moduliert, wobei durch diese Modulation ein vorbestimmtes, spezifisches Codewort dem Sendesignal aufgeprägt wird. Ein solchermaßen moduliertes Sendesignal wird dann von dem Ultraschallsensor ausgesendet. Der Ultraschallsensor empfängt dann das Empfangssignal, welches mit einem Referenzsignal verglichen wird, wobei als Referenzsignal das zuvor ausgesendete Sendesignal verwendet wird. In Abhängigkeit von einem Ergebnis des Vergleichs wird dann die Herkunft des Empfangssignals bestimmt. Erfindungsgemäß ist vorgesehen, dass im Rahmen des Vergleichs des Empfangssignals mit dem Sendesignal ein Codewort aus dem Empfangssignal extrahiert und mit dem Codewort des Sendesignals verglichen wird.

Anstatt eine Korrelation zwischen dem Empfangssignal und dem Sendesignal zu berechnen, wird somit aus dem Empfangssignal das Codewort extrahiert und mit dem bekannten Codewort des Sendesignals (Referenzcodewort) vergleichen, In Abhängigkeit von diesem Vergleich wird dann die Herkunft des Empfangssignals bestimmt. Der Erfindung liegen mehrere Erkenntnisse zugrunde: Sie beruht zunächst auf der Erkenntnis, dass im Stand der Technik mithilfe der Korrelation nicht immer mit höchster Genauigkeit festgestellt werden kann, ob das Empfangssignal tatsächlich von dem Ultraschallsensor stammt oder nicht. Die Erfindung basiert ferner auf der Erkenntnis, dass dies im Stand der Technik deshalb nicht möglich ist, weil sich das fahrzeugexterne Objekt häufig relativ zum Kraftfahrzeug bewegt und die Relativgeschwindigkeit zwischen dem Kraftfahrzeug und dem Objekt eine Frequenzverschiebung des Ultraschallsignals aufgrund des Dopplereffekts verursacht. Bei einer solchen Frequenzverschiebung ändert sich bei dem Empfangssignal zusätzlich noch die Amplitude, da der Ultraschallsensor außerhalb der Resonanzfrequenz angeregt wird. Diese beiden Veränderungen - die Veränderung der Frequenz einerseits und die Veränderung der Amplitude andererseits - beeinflussen das Korrelationsergebnis negativ, sodass die Übereinstimmung der Signale selbst bei einer gleichen Modulation bzw. bei der gleichen Codierung nicht mehr detektiert werden kann. Der Erfindung liegt auch die Erkenntnis zugrunde, dass die Nachteile des Stands der Technik dadurch umgangen werden können, dass aus dem empfangenen Empfangssignal ein Codewort extrahiert wird, welches dann mit dem als Referenz dienenden Codewort des Sendesignals verglichen wird. Das erfindungsgemäße Verfahren hat den Vorteil, dass die Herkunft des Empfangssignals auch bei einer Relativbewegung zwischen dem Kraftfahrzeug und dem Objekt mit höchster Genauigkeit bestimmt werden kann und somit unabhängig von der Frequenzverschiebung des Empfangssignals festgestellt werden kann, ob das Empfangssignal tatsächlich von dem Ultraschallsensor stammt oder nicht. Auch bei einer Relativbewegung zwischen dem Kraftfahrzeug und dem Objekt kann somit das Signal des Ultraschallsensors von anderen Störsignalen unterschieden werden.

Unter einem Codewort wird vorliegend eine Folge von logischen Symbolen verstanden, nämlich insbesondere von binär kodierten logischen Symbolen, also beispielsweise "0" bzw. "1".

Bevorzugt wird im Rahmen der Überprüfung des Empfangssignals auf seine Herkunft festgestellt, ob das Empfangssignal das von einem fahrzeugexternen Objekt reflektierte Sendesignal oder aber ein von einer fremden Quelle ausgesendetes Ultraschallsignal bzw. Störsignal ist. Beispielsweise wird das Empfangssignal dann als von dem Ultraschallsensor stammend bewertet, wenn beim Vergleich des Codeworts des Empfangssignals mit dem Codewort des Sendesignals eine relativ hohe Ähnlichkeit festgestellt wird. Wird hingegen festgestellt, dass die beiden Codewörter unähnlich sind bzw. eine geringe Ähnlichkeit aufweisen, so kann das Empfangssignal als Störsignal verworfen werden. Es erweist sich als vorteilhaft, wenn das Empfangssignal dann als das von einem fahrzeugexternen Objekt reflektierte Sendesignal, also als das eigene Signal des Ultraschallsensors bewertet wird, wenn zumindest eine vorbestimmte Anzahl von logischen Symbolen des aus dem Empfangssignal extrahierten Codeworts mit korrespondierenden logischen Symbolen des Codeworts des Sendesignals übereinstimmen. Es wird somit ermöglicht, zwischen dem eigenen Signal des Ultraschallsensors einerseits und einem Störsignal einer fremden Quelle andererseits zuverlässig zu unterscheiden.

Wie bereits ausgeführt, kann es vorkommen, dass das Empfangssignal gegenüber dem Sendesignal aufgrund einer Relativbewegung zwischen dem Kraftfahrzeug und dem Hindernis frequenz-verschoben ist. In einer solchen Situation ist das Empfangssignal gegenüber dem Sendesignal im Zeitbereich komprimiert oder ausgedehnt und somit insgesamt kürzer oder länger, nämlich je nach dem, ob sich das Kraftfahrzeug in Richtung auf das Objekt zu oder aber von dem Objekt weg bewegt. Weil bei einer derartigen Doppler-Verschiebung die Ermittlung des Codeworts aus dem Empfangssignal nicht mehr ohne Weiteres möglich ist, musste eine spezielle Methode entwickelt werden, mit welcher das Codewort auch aus einem frequenz-verschobenen Empfangssignal extrahiert werden kann. Diese Methode wird nachfolgend näher erläutert:
Erfindungsgemäß wird zum Extrahieren des Codeworts aus dem Empfangssignal selbiges Empfangssignal in eine Mehrzahl von zeitlichen Signalanteilen unterteilt, und jedem Signalanteil wird jeweils ein Teilcodewort zugeordnet. Zur Bestimmung der Teilcodewörter wird eine zeitliche Länge eines ersten zeitlichen Signalanteils des Empfangssignals sowie eine zeitliche Länge zumindest eines weiteren zeitlichen Signalanteils des Empfangssignals erfasst. Die zeitliche Länge des weiteren Signalanteils wird mit der zeitlichen Länge des ersten zeitlichen Signalanteils ins Verhältnis gesetzt. Durch die Bestimmung des Verhältnisses der Länge des weiteren Signalanteils zur Länge des ersten Signalanteils wird ermöglicht, das gesamte Codewort auch aus einem frequenz-verschobenen, also im Zeitbereich komprimierten oder ausgedehnten Empfangssignal zu extrahieren.

Dem Unterteilen des Empfangssignals in eine Vielzahl von zeitlichen Signalanteilen liegt der Gedanke zugrunde, dass das Sendesignal in der Regel aus einer Vielzahl von aufeinander folgenden Wellenimpulsen besteht. Somit besteht auch das Empfangssignal aus einer Vielzahl von Wellenimpulsen, die voneinander separiert und separat voneinander analysiert werden können. Zum Extrahieren des Codeworts aus dem Empfangssignal wird dieses Empfangssignal daher vorzugsweise in eine Mehrzahl von Wellenimpulsen als Signalanteile unterteilt. Die Länge des Wellenimpulses wird als eine Referenzgröße bzw. Bezugsgröße für die Längen der weiteren Wellenimpulse verwendet.

In einer Ausführungsform wird dem ersten Signalanteil (Wellenimpuls) ein vorbestimmtes Teilcodewort zugeordnet, während dem weiteren Signalanteil (Wellenimpuls) ein Teilcodewort wird, welches in Abhängigkeit von dem Verhältnis der zeitlichen Längen bestimmt wird. Der erste Signalanteil erhält somit ein vorbestimmtes bzw. vordefiniertes Teilcodewort - etwa 111111 -, und der weitere Signalanteil erhält ein Teilcodewort, welches unter Berücksichtigung des Verhältnisses der zeitlichen Länge dieses weiteren Signalanteils zur Länge des ersten Signalanteils ermittelt wird. Somit ist ausschließlich das Verhältnis der zeitlichen Längen maßgeblich für das Teilcodewort des weiteren Signalanteils, sodass das gesamte Codewort des Empfangssignals vollkommen unabhängig von der Frequenzverschiebung des Empfangssignals bzw. unabhängig von seiner Länge bestimmt werden kann.

Beispielsweise wird dem ersten Signalanteil ein Teilcodewort mit einer vorbestimmten Anzahl von gleichen logischen Symbolen zugeordnet, etwa ein Teilcodewort, welches aus einer vorbestimmten Anzahl von "1" oder "0" besteht. Die Länge dieses Teilcodeworts bzw. die Anzahl der logischen Symbole ist dann unabhängig von der zeitlichen Länge des ersten Signalanteils. Eine solche Vorgehensweise ermöglicht eine besonders robuste und zuverlässige Bestimmung des gesamten Codeworts des Empfangssignals, welches dann mit dem Codewort des Sendesignals verglichen werden kann.

Dem weiteren Signalanteil hingegen kann ein Teilcodewort mit einer Anzahl von, insbesondere gleichen, logischen Symbolen zugeordnet werden, welche (die Anzahl) in Abhängigkeit von dem Verhältnis der zeitlichen Längen bestimmt wird. Somit erhält der weitere Signalanteil ebenfalls ein Teilcodewort, welches aus gleichen und vorbestimmten logischen Symbolen besteht; lediglich die Anzahl dieser Symbole wird unter Berücksichtigung des Verhältnisses der zeitlichen Längen der Signalanteile bestimmt. Dies kann ohne viel Aufwand implementiert werden.

Besonders bevorzugt wird diese Anzahl der logischen Symbole des Teilcodeworts des weiteren Signalanteils derart bestimmt, dass ein Verhältnis dieser Anzahl zu der Anzahl der logischen Symbole des Teilcodeworts des ersten Signalanteils gleich dem Verhältnis der zeitlichen Längen der beiden Signalanteile ist.

Nach der vorgestellten Methode wird somit mit anderen Worten das Verhältnis der zeitlichen Länge des zumindest einen weiteren Signalanteils zur zeitlichen Länge des ersten Signalanteils des Empfangssignals bestimmt. Dieses Verhältnis wird dann mit dem entsprechenden Verhältnis des Sendesignals verglichen, also mit dem Verhältnis der zeitlichen Länge des weiteren Signalanteils zur zeitlichen Länge des ersten Signalanteils des Sendesignals. Diese Methode macht sich die Tatsache zunutze, dass das Sendesignal eine Vielzahl von Signalanteilen (Wellenimpulsen) beinhaltet und in der Weise moduliert bzw. codiert wird, dass jedem Signalanteil ein separates Teilcodewort aufgeprägt wird und die zeitliche Länge der Signalanteile von der Anzahl der logischen Symbole des jeweiligen, zugeordneten Teilcodeworts eingestellt wird.

Um die Anzahl der logischen Symbole des gesamten Codeworts des Sendesignals - und entsprechend auch des Empfangssignals - auf ein Maximum zu bringen und somit den Fehler bei der Bestimmung der Herkunft des Empfangssignals auf ein Minimum zu reduzieren, können jeweilige Übergänge zwischen den zeitlichen Signalanteilen erfasst werden. Dann kann jedem Übergang jeweils zumindest ein vorbestimmtes logisches Symbol - etwa eine "0" oder eine "1" - zugeordnet werden. Das gesamte Codewort des Empfangssignals setzt sich dann aus den Teilcodewörtern der Signalanteile einerseits sowie aus den logischen Symbolen der Übergänge andererseits zusammen.

Eine erfindungsgemäße Fahrerassistenzeinrichtung für ein Kraftfahrzeug umfasst einen Ultraschallsensor sowie eine Steuereinrichtung, welche dazu ausgelegt ist, den Ultraschallsensor zum Aussenden eines modulierten Sendesignals mit einem aufgeprägten Codewort anzusteuern, ein von dem Ultraschallsensor empfangenes Empfangssignal mit dem Sendesignal zu vergleichen und in Abhängigkeit von einem Ergebnis dieses Vergleichs die Herkunft des Empfangssignals zu bestimmen. Die Steuereinrichtung kann im Rahmen des Vergleichs des Empfangssignals mit dem Sendesignal ein Codewort aus dem Empfangssignal extrahieren und mit dem Codewort des Sendesignals vergleichen.

Ein erfindungsgemäßes Kraftfahrzeug umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Dabei zeigen:
- Fig. 1: in schematischer Darstellung ein Kraftfahrzeug mit einer Fahrerassistenzeinrichtung gemäß einer Ausführungsform der Erfindung;
- Fig. 2: ein Flussdiagramm eines Verfahrens gemäß einer Ausführungsform der Erfindung; und
- Fig. 3: zeitliche Verläufe eines Sendesignals, eines Empfangssignals ohne eine Dopplerverschiebung sowie eines Empfangssignals mit der Dopplerverschiebung.

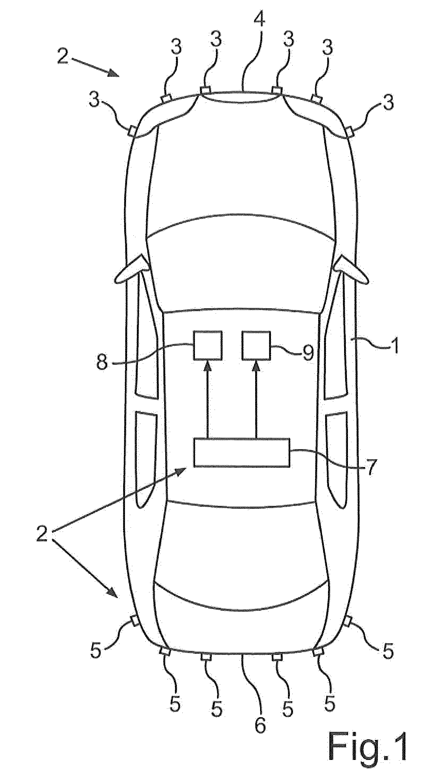

Ein in Fig. 1 dargestelltes Kraftfahrzeug 1 ist im Ausführungsbeispiel ein Personenkraftwagen. Es beinhaltet eine Fahrerassistenzeinrichtung 2, welche eine Parkhilfe ist. Die Fahrerassistenzeinrichtung 2 dient zum Unterstützen des Fahrers des Kraftfahrzeugs 1 beim Einparken in eine Parklücke sowie beim Ausparken aus der Parklücke. Die Fahrerassistenzeinrichtung 2 umfasst zu diesem Zwecke eine Vielzahl von Ultraschallsensoren 3, welche an einem vorderen Stoßfänger 4 des Kraftfahrzeugs 1 verteilt angeordnet sind, wie auch eine Vielzahl von Ultraschallsensoren 5, welche an einem hinteren Stoßfänger 6 verteilt angeordnet sind. Alle Ultraschallsensoren 3, 5 sind mit einer Steuereinrichtung 7 der Fahrerassistenzeinrichtung 2 elektrisch gekoppelt. Die Steuereinrichtung 7 kann einen digitalen Signalprozessor sowie einen Mikrocontroller beinhalten und dient zur Ansteuerung der Ultraschallsensoren 3, 5. Die Steuereinrichtung 7 empfängt auch Signale von den Ultraschallsensoren 3, 5 und bestimmt in Abhängigkeit von diesen Signalen die Abstände zwischen dem Kraftfahrzeug 1 und in seiner Umgebung befindlichen Hindernissen. In Abhängigkeit von diesen Abständen kann die Steuereinrichtung 7 beispielsweise einen Lautsprecher 8 und/oder eine optische Anzeigeeinrichtung 9 - etwa ein Display - ansteuern. Mithilfe des Lautsprechers 8 und/oder der Anzeigeeinrichtung 9 wird der Fahrer über die gemessenen Abstände informiert.

Die Steuereinrichtung 7 kann die Ultraschallsensoren 3, 5 derart ansteuern, dass die Ultraschallsensoren 3, 5 jeweils ein Sendesignal (Ultraschall) mit einem aufgeprägten, spezifischen bzw. vorbestimmten Codewort aussenden. Dazu werden die Sendesignale moduliert, etwa frequenz-moduliert und/oder amplituden-moduliert. Nachfolgend wird ein Verfahren gemäß einer Ausführungsform näher erläutert. Wenngleich sich die nachfolgende Beschreibung auf einen einzigen Ultraschallsensor 3, 5 bezieht, können auch alle anderen Ultraschallsensoren 3, 5 in der gleichen Art und Weise betrieben werden.

Der Ultraschallsensor 3, 5 sendet ein Sendesignal aus, welches auf eine spezifische Art und Weise moduliert ist und somit ein spezifisches Codewort als Kennung aufweist. Dieses Sendesignal wird dann von einem fahrzeugexternen Hindernis bzw. Objekt reflektiert und gelangt wieder zum Ultraschallsensor 3, 5 als Empfangssignal. Der Ultraschallsensor 3, 5 empfängt dieses Empfangssignal. Die Steuereinrichtung 7 überprüft nun, ob dieses Empfangssignal von dem in Rede stehenden Ultraschallsensor 3, 5 stammt bzw. ob das Empfangssignal tatsächlich das von dem Objekt reflektierte Sendesignal des Ultraschallsensors 3, 5 ist oder nicht. Wird diese Frage bejaht, so kann das Empfangssignal weiter verarbeitet werden; andernfalls kann das Empfangssignal als Steuersignal verworfen werden.

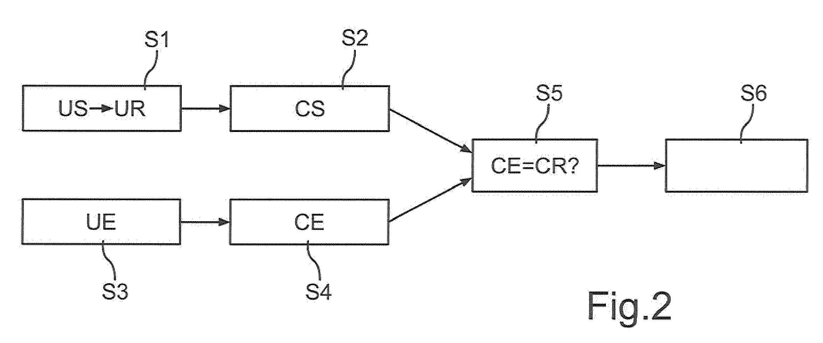

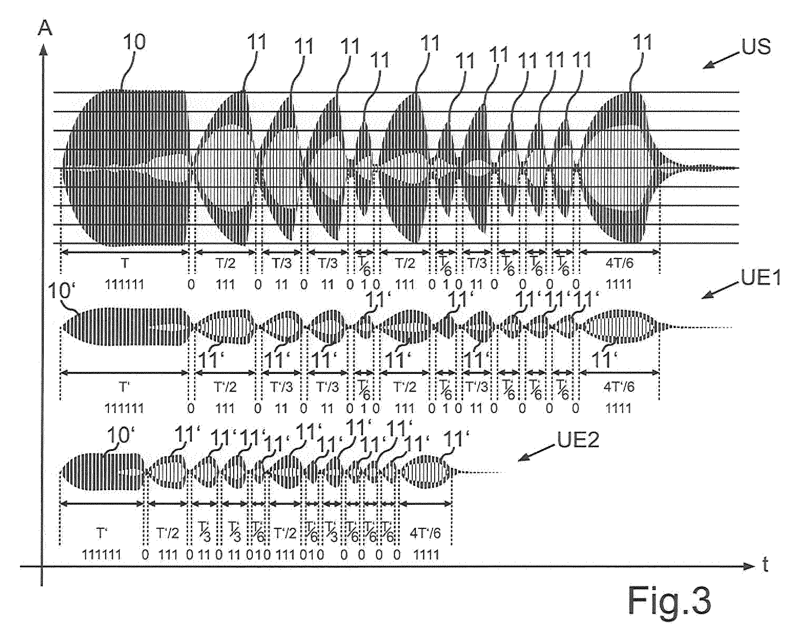

Ein solches Verfahren zum Bestimmen der Herkunft des Empfangssignals wird nun unter Bezugnahme auf Fig. 2 näher erläutert: In einem ersten Schritt S1 wird das Sendesignal US durch den Ultraschallsensor 3, 5 ausgesendet. Dieses Sendesignal US wird gleichzeitig auch als Referenzsignal UR abgespeichert. Dieses Sendesignal US beinhaltet eine Vielzahl von aufeinander folgenden Wellenimpulsen, denen jeweils ein separates Teilcodewort mithilfe einer Modulation aufgeprägt wird. Ein beispielhafter Verlauf eines solchen Sendesignals US über der Zeit t ist in Fig. 3 dargestellt. Auf der y-Achse ist die Amplitude A aufgetragen. Das Sendesignal US beinhaltet eine Vielzahl von Wellenimpulsen, welche zeitliche Signalanteile des Sendesignals US darstellen. Ein erster Wellenimpuls 10 hat eine zeitliche Länge T und erhält ein Teilcodewort, welches aus einer vorbestimmten Anzahl von gleichen logischen Symbolen besteht, etwa: 111111. Das Sendesignal US beinhaltet auch weitere Wellenimpuls 11, die ebenfalls jeweils ein separates Teilcodewort erhalten. Auch die weiteren Wellenimpulse 11 erhalten jeweils ein Teilcodewort, welches gleiche logische Symbole beinhaltet, nämlich im Ausführungsbeispiel "1". Die zeitliche Länge der weiteren Wellenimpuls 11 wird dabei in Abhängigkeit von der Länge des zugeordneten Teilcodeworts bzw. von der Anzahl der logischen Symbole dieses zugeordneten Teilcodeworts moduliert. Beispielsweise wird dem zweiten Wellenimpuls 11 ein Teilcodewort 111 aufgeprägt - dies bedeutet, dass die zeitliche Länge dieses zweiten Wellenimpulses 11 gleich T/2 ist. Die zeitliche Länge des ersten Wellenimpulses 10 stellt somit eine Bezugsgröße dar. Das Sendesignal US gemäß Fig. 3 setzt sich also aus folgenden Wellenimpulsen zusammen:
- erster Wellenimpuls 10: zeitliche Länge T; Teilcodewort 111111;
- zweiter Wellenimpuls 11: zeitliche Länge T/2; Teilcodewort 111;
- dritter Wellenimpuls 11: zeitliche Länge T/3; Teilcodewort 11;
- vierter Wellenimpuls 11: zeitliche Länge T/3; Teilcodewort 11,
- fünfter Wellenimpuls 11: zeitliche Länge T/6; Teilcodewort 1;
- sechster Wellenimpuls 11: zeitliche Länge T/2; Teilcodewort 111;
- siebter Wellenimpuls 11: zeitliche Länge T/6; Teilcodewort 1;
- achter Wellenimpuls 11: zeitliche Länge T/3; Teilcodewort 11;
- neunter, zehnter und elfter Wellenimpuls 11: zeitliche Länge jeweils T/6; Teilcodewort jeweils 1;
- zwölfter Wellenimpuls 11: zeitliche Länge 4T/6; Teilcodewort 1111.

Auch die Übergänge zwischen den einzelnen Wellenimpulsen 10, 11 werden jeweils mit einem logischen Symbol versehen, nämlich insbesondere mit jeweils gleichen logischen Symbolen, etwa "0". Das gesamte Codewort des Sendesignals US setzt sich also aus den Teilcodewörtern der Wellenimpulse 10, 11 einerseits sowie aus den logischen Symbolen der Übergänge andererseits zusammen. Im Ausführungsbeispiel gemäß Fig. 3 ergibt sich folgendes gesamtes Codewort CS:
11111101110110110101110101101010101111

Mit erneutem Bezug auf Fig. 2 werden in einem weiteren Schritt S2 die jeweiligen Verhältnisse der zeitlichen Längen der weiteren Wellenimpuls 11 zur zeitlichen Länge T des ersten Wellenimpuls 10 des Sendesignals US bestimmt und abgelegt. Ergänzend oder alternativ kann auch das gesamte Codewort CS des Sendesignals US abgespeichert werden.

Also wird das modulierte Sendesignal US durch den Ultraschallsensor 3, 5 ausgesendet. Der Ultraschallsensor 3, 5 empfängt dann ein Empfangssignal UE, nämlich in einem weiteren Schritt S3. Bewegt sich das Kraftfahrzeug 1 relativ zum Objekt, von welchem das Sendesignal US reflektiert wird, so ist das Empfangssignal UE frequenz-verschoben gegenüber dem Sendesignal US. Ist eine derartige Relativbewegung zwischen dem Kraftfahrzeug 1 und dem Objekt nicht gegeben, so weist das Empfangssignal UE dieselbe Frequenz wie das Sendesignal US auf.

In Fig. 3 sind außerdem beispielhafte Verläufe des Empfangssignals UE gezeigt, und zwar ein Verlauf des Empfangssignal UE1 ohne die Dopplerverschiebung, wie auch ein Verlauf des Empfangssignals UE2 mit der Dopplerverschiebung, also bei einer Relativbewegung zwischen dem Kraftfahrzeug 1 und dem Objekt.

In einem weiteren Schritt S4 wird aus dem Empfangssignal UE ein Codewort CE extrahiert. Dieses aus dem Empfangssignal UE extrahierte Codewort CE wird dann in einem weiteren Schritt S5 mit dem Codewort CS verglichen. In Abhängigkeit von dem Ergebnis dieses Vergleichs wird nachfolgend in Schritt S6 festgestellt, ob das Empfangssignal UE das von dem Ultraschallsensor 3, 5 ausgesendete und von dem Objekt reflektierte Sendesignal US ist oder nicht. Hier kann beispielsweise ein Schwellwert für die Anzahl der übereinstimmenden logischen Symbole des Codeworts CE mit den logischen Symbolen des Codeworts CS vordefiniert bzw. vorgegeben werden, sodass das Empfangssignal UE dann als von dem Ultraschallsensor 3, 5 stammend beurteilt wird, wenn zumindest eine vorbestimmte Anzahl der logischen Symbole des Codeworts CE mit den korrespondierenden logischen Symbolen des Codeworts CS übereinstimmen.

Bezugnehmend noch einmal auf die beispielhaften Verläufe des Empfangssignals UE in Fig. 3 wird nachfolgend eine Methode näher beschrieben, wie das Codewort aus dem Empfangssignal UE extrahiert werden kann. Dabei wird die Art und Weise der Modulation und der Codierung des Sendesignals US berücksichtigt. Gemäß dieser Methode kann das Codewort CE aus dem Empfangssignal UE unabhängig davon extrahiert werden, ob das Empfangssignal UE aufgrund des Dopplereffekts phasenverschoben ist oder nicht. Die Methode gilt also sowohl für das Empfangssignal UE1 als auch für das Empfangssignal UE2.

Das empfangene Signal UE wird zunächst in Signalanteile unterteilt, also in Wellenimpulse. Zunächst wird ein erster Wellenimpuls 10' erfasst, und es wird seine zeitliche Länge T' ermittelt. Dann werden weitere Wellenimpuls 11' erfasst. Es wird die jeweilige zeitliche Länge der weiteren Wellenimpulse 11' bezogen auf die Länge T' des ersten Wellenimpulses 10' bestimmt. Im Ausführungsbeispiel gemäß Fig. 3 weisen die weiteren Wellenimpulse 11' des Empfangssignals UE1 sowie des Empfangssignals UE2 folgende zeitliche Längen in Bezug auf die Länge T' auf: zweiter Impuls T'/2; dritter Impuls T'/3; vierter Impuls T'/3; fünfter Impuls T'/6; sechster Impuls T'/2; siebter Impuls T'/6; achter Wellenimpuls T'/3; neunter, zehnter und elfter Wellenimpuls T'/6; und zwölfter Impuls 4T'/6.

Jeder zeitlichen Länge wird nun eine andere Anzahl von gleichen logischen Symbolen zugeordnet, nämlich - wie beim Sendesignal US - von logischen "1". Die gesamte Länge T' erhält sechs logische Symbole "1". Für die weiteren Wellenimpulse 11' wird jeweils ein Verhältnis der jeweiligen zeitlichen Länge dieses Wellenimpulses 11' zur zeitlichen Länge T' des ersten Wellenimpulses 10' berechnet. Die Anzahl der zugeordneten logischen Symbole wird dann in Abhängigkeit von diesem Verhältnis bestimmt: Das Verhältnis der Anzahl der zugeordneten logischen Symbole zur Anzahl der Symbole des ersten Wellenimpuls 10' ist dann gleich dem Verhältnis dieser zeitlichen Längen. So erhält ein Wellenimpuls 11', dessen zeitliche Länge T'/2 beträgt, drei logische Symbole "1", während ein Wellenimpuls 11' mit der zeitlichen Länge von T'/3 zwei logische Symbole "1" erhält usw.

Auch die Übergänge zwischen den Wellenimpulsen 10', 11' erhalten jeweils ein logisches Symbol, nämlich eine logische "0", wie das Sendesignal US. Es wird also angenommen, dass die Länge eines Übergangs gleich T'/6 ist.

Wie für das Sendesignal US ergibt sich somit auch für die beispielhaften Empfangssignale UE1, UE2 das folgende Codewort:
11111101110110110101110101101010101111

Die oben vorgestellte Methode ist somit besonders robust und unabhängig davon, ob das Empfangssignal UE gegenüber dem Sendesignal US frequenz-verschoben ist oder nicht. Auch bei einer Relativbewegung zwischen dem Kraftfahrzeug und dem Objekt kann somit die Herkunft des Empfangssignal UE mit hoher Wahrscheinlichkeit bestimmt werden.

## Patentansprüche

1. Verfahren zum Überprüfen eines von einem Ultraschallsensor (3, 5) eines Kraftfahrzeugs (1) empfangenen Empfangssignals (UE) auf seine Herkunft, wobei
- ein Sendesignal (US) des Ultraschalfsensors (3, 5) moduliert wird und durch diese Modulation ein vorbestimmtes Codewort (CS) dem Sendesignal (US) aufgeprägt wird,
- das empfangene Empfangssignal (UE) mit dem Sendesignal (US) verglichen wird und
- in Abhängigkeit von einem Ergebnis des Vergleichs die Herkunft des Empfangssignals (UE) bestimmt wird,
wobei im Rahmen des Vergleichs des Empfangssignals (UE) mit dem Sendesignal (US) ein Codewort (CE) aus dem Empfangssignal (UE) extrahiert und mit dem Codewort (CS) des Sendesignals (US) verglichen wird,
**dadurch gekennzeichnet, dass**
zum Extrahieren des Codeworts (CE) aus dem Empfangssignal (UE) dieses Empfangssignal (UE) in eine Mehrzahl von zeitlichen Signalanteilen (10', 11') unterteilt wird und jedem Signalanteil (10', 11') jeweils ein Teilcodewort zugeordnet wird, wobei zur Bestimmung der Teilcodewörker eine zeitliche Länge (T') eines ersten zeitlichen Signalanteils (10') des Empfangssignal (UE) sowie eine zeitliche Länge zumindest eines weiteren zeitlichen Signalanteils (11') des Empfangssignals (UE) erfasst werden und die zeitliche Länge des weiteren Signalanteils (11') mit der zeitlichen Länge (T') des ersten zeitlichen Signalanteils (10') ins Verhältnis gesetzt wird.

2. Verfahren nach Anspruch 1,
**dadurch gekennzeichnet, dass**
im Rahmen der Überprüfung des Empfangssignals (UE) auf seine Herkunft festgestellt wird, ob das Empfangssignal (UE) das von einem fahrzeugexternen Objekt reflektierte Sendesignal (US) oder ein von einer fremden Quelle ausgesendetes Störsignal ist.

3. Verfahren nach Anspruch 1 oder 2,
**dadurch gekennzeichnet, dass**
das Empfangssignal (UE) dann als das von einem fahrzeugexternen Objekt reflektierte Sendesignal (US) bewertet wird, wenn zumindest eine vorbestimmte Anzahl von logischen Symbolen des aus dem Empfangssignal (UE) extrahierten Codeworts (CE) mit logischen Symbolen des Codeworts (CS) des Sendesignals (US) übereinstimmen.

4. Verfahren nach einem der vorhergehenden Ansprüche,
**dadurch gekennzeichnet, dass**
zum Extrahieren des Codeworts (CE) das Empfangssignal (UE) in eine Mehrzahl von Wellenimpulsen als Signalanteilen (10', 11') unterteilt wird.

5. Verfahren nach einem der vorhergehenden Ansprüche,
**dadurch gekennzeichnet, dass**
dem ersten Signalanteil (10') ein vorbestimmtes Teilcodewort zugeordnet wird und dem weiteren Signalanteil (11') ein Teilcodeworts zugeordnet wird, das in Abhängigkeit von dem Verhältnis der zeitlichen Längen (T') bestimmt wird.

6. Verfahren nach Anspruch 5,
**dadurch gekennzeichnet, dass**
dem ersten Signalanteil (10') ein Teilcodewort mit einer vorbestimmten Anzahl von gleichen logischen Symbolen zugeordnet wird.

7. Verfahren nach Anspruch 5 oder 6,
**dadurch gekennzeichnet, dass**
dem weiteren Signalanteil (11') ein Teilcodewort mit einer Anzahl von, insbesondere gleichen, logischen Symbolen zugeordnet wird, welche in Abhängigkeit von dem Verhältnis der zeitlichen Längen (T') bestimmt wird.

8. Verfahren nach Anspruch 6 und 7,
**dadurch gekennzeichnet, dass**
ein Verhältnis der Anzahl der logischen Symbole des dem weiteren Signalanteil (11') zugeordneten Teilcodeworts zu der Anzahl der logischen Symbole des Teilcodeworts des ersten Signalanteils (10') gleich dem Verhältnis der zeitlichen Längen (T') ist.

9. Verfahren nach einem der vorhergehenden Ansprüche,
**dadurch gekennzeichnet, dass**
jeweilige Übergänge zwischen den zeitlichen Signalanteilen (10', 11') erfasst werden und jedem Übergang jeweils zumindest ein vorbestimmtes logisches Symbol zugeordnet wird, wobei das gesamte Codewort (CE) des Empfangssignal (UE) aus den Teilcodewörtern der Signalanteil (10', 11') sowie aus den logischen Symbolen der Übergänge zusammengesetzt wird.

10. Fahrerassistenzeinrichtung (2) für ein Kraftfahrzeug (1), mit zumindest einem Ultraschallsensor (3, 5) und mit einer Steuereinrichtung (7), welche dazu ausgelegt ist, den Ultraschallsensor (3, 5) zum Aussenden eines modulierten Sendesignals (US) mit einem aufgeprägten Codewort (CS) anzusteuern, ein von dem Ultraschallsensor (3, 5) empfangenes Empfangssignal (UE) mit dem Sendesignal (US) zu vergleichen und in Abhängigkeit von einem Ergebnis des Vergleichs die Herkunft des Empfangssignal (UE) zu bestimmen,
wobei die Steuereinrichtung (7) dazu ausgelegt ist, im Rahmen des Vergleichs des Empfangssignals (UE) mit dem Sendesignal (US) ein Codewort (CE) aus dem Empfangssignal (UE) zu extrahieren und mit dem Codewort (CS) des Sendesignals (US) zu vergleichen,
**dadurch gekennzeichnet, dass**
die Steuereinrichtung (7) dazu ausgelegt ist, zum Extrahieren des Codeworts (CE) aus dem Empfangssignal (UE) dieses Empfangssignal (UE) in eine Mehrzahl von zeitlichen Signalanteilen (10', 11') zu unterteilen und jedem Signalanteil (10', 11') jeweils ein Teilcodewort zuzuordnen, wobei zur Bestimmung der Teilcodewörter eine zeitliche Länge (T') eines ersten zeitlichen Signalanteils (10') des Empfangssignals (UE) sowie eine zeitliche Länge zumindest eines weiteren zeitlichen Signalanteils (11') des Empfangssignal (UE) erfasst werden und die zeitliche Länge des weiteren Signalanteils (11') mit der zeitlichen Länge (T') des ersten zeitlichen Signalanteils (10') ins Verhältnis gesetzt wird.

11. Kraftfahrzeug (1) mit einer Fahrerassistenzeinrichtung (2) nach Anspruch 10.

## Claims

1. Method for checking the origin of a reception signal (UE) received by an ultrasonic sensor (3, 5) of a motor vehicle (1), wherein
- a transmission signal (US) from the ultrasonic sensor (3, 5) is modulated and a predetermined code word (CS) is impressed on the transmission signal (US) as a result of this modulation,
- the received reception signal (UE) is compared with the transmission signal (US), and
- the origin of the reception signal (UE) is determined on the basis of a result of the comparison,
wherein, during the comparison of the reception signal (UE) with transmission signal (US), a code word (CE) is extracted from the reception signal (UE) and is compared with the code word (CS) of the transmission signal (US),
**characterized in that**
in order to extract the code word (CE) from the reception signal (UE), this reception signal (UE) is subdivided into a plurality of temporal signal components (10', 11') and a partial code word is respectively assigned to each signal component (10', 11'), wherein, in order to determine the partial code words, a temporal length (T') of a first temporal signal component (10') of the reception signal (UE) and a temporal length of at least one further temporal signal component (11') of the reception signal (UE) are recorded and the temporal length of the further signal component (11') is related to the temporal length (T') of the first temporal signal component (10').

2. Method according to Claim 1,
**characterized in that**
while checking the origin of the reception signal (UE), it is determined whether the reception signal (UE) is the transmission signal (US) reflected by an object outside the vehicle or an interference signal emitted by an extraneous source.

3. Method according to Claim 1 or 2,
**characterized in that**
the reception signal (UE) is assessed as being the transmission signal (US) reflected by an object outside the vehicle when at least a predetermined number of logical symbols in the code word (CE) extracted from the reception signal (UE) matches logical symbols in the code word (CS) of the transmission signal (US).

4. Method according to one of the preceding claims,
**characterized in that**
in order to extract the code word (CE), the reception signal (UE) is subdivided into a plurality of wave pulses as signal components (10', 11').

5. Method according to one of the preceding claims,
**characterized in that**
a predetermined partial code word is assigned to the first signal component (10') and a partial code word which is determined on the basis of the ratio of the temporal lengths (T') is assigned to the further signal component (11').

6. Method according to Claim 5,
**characterized in that**
a partial code word having a predetermined number of identical logical symbols is assigned to the first signal component (10').

7. Method according to Claim 5 or 6,
**characterized in that**
a partial code word having a number of, in particular identical, logical symbols, which is determined on the basis of the ratio of the temporal lengths (T'), is assigned to the further signal component (11').

8. Method according to Claims 6 and 7,
**characterized in that**
a ratio of the number of logical symbols in the partial code word assigned to the further signal component (11') to the number of logical symbols in the partial code word of the first signal component (10') is equal to the ratio of the temporal lengths (T').

9. Method according to one of the preceding claims,
**characterized in that**
respective transitions between the temporal signal components (10', 11') are recorded and at least one predetermined logical symbol is respectively assigned to each transition, wherein the entire code word (CE) of the reception signal (UE) is composed of the partial code words of the signal components (10', 11') and the logical symbols of the transitions.

10. Driver assistance device (2) for a motor vehicle (1), having at least one ultrasonic sensor (3, 5) and having a control device (7) which is designed to control the ultrasonic sensor (3, 5) to emit a modulated transmission signal (US) having an impressed code word (CS), to compare a reception signal (UE) received by the ultrasonic sensor (3, 5) with the transmission signal (US) and to determine the origin of the reception signal (UE) on the basis of a result of the comparison,
wherein the control device (7) is designed, during the comparison of the reception signal (UE) with the transmission signal (US), to extract a code word (CE) from the reception signal (UE) and to compare it with the code word (CS) of the transmission signal (US),
**characterized in that**
the control device (7) is designed, in order to extract the code word (CE) from the reception signal (UE), to subdivide this reception signal (UE) into a plurality of temporal signal components (10', 11') and to respectively assign a partial code word to each signal component (10', 11'), wherein, in order to determine the partial code words, a temporal length (T') of a first temporal signal component (10') of the reception signal (UE) and a temporal length of at least one further temporal signal component (11') of the reception signal (UE) are recorded and the temporal length of the further signal component (11') is related to the temporal length (T') of the first temporal signal component (10').

11. Motor vehicle (1) having a driver assistance device (2) according to Claim 10.

## Revendications

1. Procédé de vérification de l'origine d'un signal de réception (UE) reçu par un capteur à ultrasons (3, 5) d'un véhicule automobile (1), dans lequel
- un signal d'émission (US) du capteur à ultrasons (3, 5) est modulé et un mot de code prédéterminé (CS) est appliqué au signal d'émission (US) par l'intermédiaire de ladite modulation,
- le signal de réception reçu (UE) est comparé au signal d'émission (US), et
- l'origine du signal de réception (UE) est déterminée en fonction d'un résultat de la comparaison,
dans lequel un mot de code (CE) est extrait du signal de réception (UE) dans le contexte de la comparaison du signal de réception (UE) au signal d'émission (US) et est comparé au mot de code (CS) du signal d'émission (US),
**caractérisé en ce que** ledit signal de réception (UE) est subdivisé en une pluralité de parties de signal temporelles (10', 11') pour extraire le mot de code (CE) du signal de réception (UE) et un mot de code partiel est respectivement associé à chaque partie de signal (10', 11'), dans lequel une longueur temporelle (T') d'une première partie de signal temporelle (10') du signal de réception (UE) ainsi qu'une longueur temporelle d'au moins une autre partie de signal temporelle (11') du signal de réception (UE) sont détectées pour déterminer les mots de code partiels et **en ce que** le rapport de la longueur temporelle de l'autre partie de signal (11') à la longueur temporelle (T') de la première partie de signal (10') est déterminé.

2. Procédé selon la revendication 1,
**caractérisé en ce qu'**il est déterminé lors du test de l'origine du signal de réception (UE) si le signal de réception (UE) est le signal d'émission (US) réfléchi par un objet extérieur au véhicule ou un signal parasite émis par une source étrangère.

3. Procédé selon la revendication 1 ou 2,
**caractérisé en ce que** le signal de réception (UE) n'est évalué comme étant le signal d'émission (US) réfléchi par un objet extérieur au véhicule que lorsqu'au moins un nombre prédéterminé de symboles logiques du mot de code (CE) extrait du signal de réception (UE) concordent avec des symboles logiques du mot de code (CS) du signal d'émission (US).

4. Procédé selon l'une quelconque des revendications précédentes,
**caractérisé en ce que** le signal de réception (UE) est subdivisé en une pluralité d'ondes impulsionnelles en tant que parties de signal (10', 11') pour extraire le mot de code (CE).

5. Procédé selon l'une quelconque des revendications précédentes,
**caractérisé en ce qu'**un mot de code partiel prédéterminé est associé à la première partie de signal (10') et **en ce qu'**un mot de code partiel, qui est déterminé en fonction du rapport des longueurs temporelles (T'), est associé à l'autre partie de signal (11').

6. Procédé selon la revendication 5,
**caractérisé en ce qu'**un mot de code partiel ayant un nombre prédéterminé de symboles logiques identiques est associé à la première partie de signal (10').

7. Procédé selon la revendication 5 ou 6,
**caractérisé en ce qu'**un mot de code partiel ayant un certain nombre de symboles logiques, qui sont notamment identiques, est associé à l'autre partie de signal (11'), lequel mot de code partiel est déterminé en fonction du rapport des longueurs temporelles (T').

8. Procédé selon les revendications 6 et 7,
**caractérisé en ce qu'**un rapport du nombre des symboles logiques du mot de code partiel associé à l'autre partie de signal (11') au nombre des symboles logiques du mot de code partiel de la première partie de signal (10') est égal au rapport des longueurs temporelles (T').

9. Procédé selon l'une quelconque des revendications précédentes,
**caractérisé en ce que** les transitions respectives entre les parties de signal temporelles (10', 11') sont détectées et **en ce qu'**au moins un symbole logique prédéterminé respectif est associé à chaque transition, dans lequel la totalité du mot de code (CE) du signal de réception (UE) est assemblée à partir des mots de code partiels des parties de signal (10', 11') ainsi qu'à partir des symboles logiques des transitions.

10. Dispositif d'assistance au conducteur (2) pour un véhicule automobile (1) comportant au moins un capteur à ultrasons (3, 5) et un dispositif de commande (7) qui est conçu pour commander le capteur à ultrasons (3, 5) afin qu'il émette un signal d'émission modulé (US) comportant un mot de code (CS) qui lui est appliqué, pour comparer un signal de réception (UE) reçu par le capteur à ultrasons (3, 5) au signal d'émission (US) et pour déterminer l'origine du signal de réception (UE) en fonction d'un résultat de la comparaison,
dans lequel le dispositif de commande (7) est conçu pour extraire un mot de code (CE) du signal de réception (UE) dans le contexte de la comparaison du signal de réception (UE) au signal d'émission (US) et pour le comparer au mot de code (CS) du signal d'émission (US),
**caractérisé en ce que** le dispositif de commande (7) est conçu pour subdiviser ledit signal de réception (UE) en une pluralité de parties de signal temporelles (10', 11') afin d'extraire le mot de code (CE) du signal de réception (UE) et pour associer un mot de code partiel respectif à chaque partie de signal (10', 11'), dans lequel une longueur temporelle (T') d'une première partie de signal temporelle (10') du signal de réception (UE) ainsi qu'une longueur temporelle d'au moins une autre partie de signal temporelle (11') du signal de réception (UE) sont détectées pour déterminer les mots de code partiels et **en ce qu'**un rapport de la longueur temporelle de l'autre partie de signal (11') à la longueur temporelle (T') de la première partie de signal temporelle (10') est déterminé.

11. Véhicule automobile (1) comportant un dispositif d'assistance au conducteur (2) selon la revendication 10.
